# EUROPÄISCHE PATENTSCHRIFT

(11) **EP 3 498 954 B1**
(45) Veröffentlichungstag und Bekanntmachung des Hinweises auf die Patenterteilung: **29.07.2020**
(21) Anmeldenummer: 18211170.8
(22) Anmeldetag: 07.12.2018
(51) Int. Cl.: E05C 9/04, H02B 1/38

(54) **VERSCHLUSSSYSTEM FÜR SCHALTSCHRANKTÜR**
CLOSURE SYSTEM FOR SWITCHGEAR CABINET DOOR
SYSTÈME DE FERMETURE POUR PORTE D'ARMOIRE DE DISTRIBUTION

(30) Priorität: 13.12.2017 DE 102017129863
(43) Veröffentlichungstag der Anmeldung: 19.06.2019
(73) Patentinhaber: Eaton Industries (Austria) GmbH, 3943 Schrems (AT)
(72) Erfinder: SIEGL, Werner, 3943 Schrems (AT); PEHERSTORFER, Franz, 3922 Schönau (AT)
(74) Vertreter: Eaton IP Group EMEA

(56) Entgegenhaltungen:
- EP-A1- 2 843 781
- WO-A1-2012/103183
- DE-C1- 19 939 614
- DE-U1-202011 004 196
- US-A1- 2003 151 337

## Beschreibung

Die Erfindung betrifft ein Verschlusssystem für eine Schaltschranktür gemäß dem Oberbegriff des Patentanspruches 1.

Es sind Schaltschränke bekannt, deren Türen mittels eines Verschlusssystems mit Verschlussstangen verschließbar sind. Hierbei greift ein Ende der Verschlussstange in einer Verriegelungsstellung in eine Öffnung des Schaltschrankgehäuses ein, um die Schaltschranktür in der geschlossenen Position zu halten. Die Verschlussstangen werden dabei durch eine Halterung im Bereich des freien Endes gehalten.

Nachteilig an derartigen Verschlusssystemen ist, dass diese oft nicht ausreichend sind, um den Druck bei einer Explosion im Schaltschrank, beispielsweise durch einen Störlichtbogen, standzuhalten. Hierbei wird oftmals die Halterung der Verschlussstange ausgerissen oder die Schaltschranktür verwindet sich bei der Explosion so stark, dass die Verschlussstange aus der Öffnung des Schaltschrankgehäuses gezogen wird. Bei einem Versagen der Schaltschranktür besteht ein hohes Risiko, dass umstehende Personen oder Geräte geschädigt werden, beziehungsweise die Umgebung in Brand gesteckt wird.

Die US 2003/151337 A1 beschreibt einen Schaltschrank mit einer Mehrzahl an Sicherheitseinrichtungen, die an einem vertikalen Flansch des Schaltschrankes befestigt sind. Jede der Sicherheitseinrichtungen umfasst ein Loch und einen Pin um in dieses einzugreifen.

Aus der DE 20 2011 004 196 U1 ist eine Verschlussvorrichtung für einen Geräteschrank bekannt, welche mehrere Riegel bzw. Zusatzriegel aufweist.

Die DE 199 39 614 C1 und die US 2012/0194044 A1 offenbaren einen druckfesten Schaltschrank, mit einer entsprechend druckfest verriegelbaren Schaltschranktür.

Aufgabe der Erfindung ist es daher ein Verschlusssystem der eingangs genannten Art anzugeben, mit welchem die genannten Nachteile vermieden werden können, mit welchem eine Schaltschranktür derart ausgebildet werden kann, dass diese hohen Drücken standhalten kann, ohne dass der Aufwand zur Herstellung der Schaltschranktür erheblich vergrößert wird.

Erfindungsgemäß wird dies durch die Merkmale des Patentanspruches 1 erreicht. Dadurch ergibt sich der Vorteil, dass eine mit dem Verschlusssystem ausgerüstete Schaltschranktür wesentlich höheren Drücken standhalten kann, wodurch die Umgebung besser vor den negativen Auswirkungen eines Störlichtbogens und der dadurch verursachten Explosion im Schaltschrank geschützt werden kann. Durch das Versteifungsprofil kann eine ansonsten herkömmlich ausgebildete Schaltschranktür wesentlich steifer ausgebildet werden, wodurch die Verschlussstangen auch bei höheren Drücken noch zuverlässig in die Öffnungen eingreifen können. Durch die in Verriegelungsaufnahmen und Verriegelungsfortsätze kann die Verschlusstange in der Verriegelungsstellung zusätzlich an mehreren Punkten befestigt sein, wodurch die Verschlussstange bei einer Explosion schwerer aus deren Halterung gerissen werden kann. Da diese zusätzliche Verankerung der Verschlusstange mit dem Versteifungsprofil lediglich in Verriegelungsstellung erfolgt und nicht in der Freigabestellung, kann eine Montage der Verschlusstange mit vergleichsweise wenig Aufwand erfolgen. Das Verschlusssystem kann weiters mit besonders wenigen Einzelteilen ausgebildet sein, was eine Montage zusätzlich erleichtert. Weiters können herkömmliche Schaltschränke einfach und mit wenig Aufwand mit dem neuen Verschlusssystem nachgerüstet werden. Zusätzlich ist das neue Verschlusssystem in der Bedienung nicht aufwendiger als herkömmliche Verschlusssysteme.

Die Erfindung betrifft weiters eine Schaltschranktür gemäß dem Patentanspruch 8.

Die Erfindung betrifft weiters einen Schaltschrank gemäß dem Patentanspruch 9.

Die Unteransprüche betreffen weitere vorteilhafte Ausgestaltungen der Erfindung.

Ausdrücklich wird hiermit auf den Wortlaut der Patentansprüche Bezug genommen, wodurch die Ansprüche an dieser Stelle durch Bezugnahme in die Beschreibung eingefügt sind und als wörtlich wiedergegeben gelten.

Die Erfindung wird unter Bezugnahme auf die beigeschlossenen Zeichnungen, in welchen lediglich eine bevorzugte Ausführungsformen beispielhaft dargestellt ist, näher beschrieben. Dabei zeigt:
Fig. 1 eine bevorzugte Ausführungsform eines Schaltschrankes von schräg vorne als axonometrische Darstellung;
Fig. 2 die bevorzugte Ausführungsform des Schaltschrankes von schräg hinten als axonometrische Darstellung, wobei Verkleidungsteile des Schaltschrankes nicht dargestellt sind, wobei zusätzlich die Bereiche A und B vergrößert dargestellt sind;
Fig. 3 einen ersten Teil der bevorzugten Ausführungsform des Schaltschrankes als Explosionsdarstellung;
Fig. 4 einen zweiten Teil der bevorzugte Ausführungsform des Schaltschrankes als Explosionsdarstellung;
Fig. 5 einen dritten Teil der bevorzugten Ausführungsform des Schaltschrankes in der Freigabestellung als axonometrische Darstellung;
Fig. 6 den dritten Teil aus Fig. 5 in der Verrieglungsstellung, wobei Teile der Verschlussstange transparent dargestellt sind;
Fig. 7 einen vierten Teil der bevorzugten Ausführungsform des Schaltschrankes in der Freigabestellung als axonometrische Darstellung; und
Fig. 8 den vierten Teil aus Fig. 7 in der Verrieglungsstellung, wobei Teile der Verschlussstange transparent dargestellt sind.

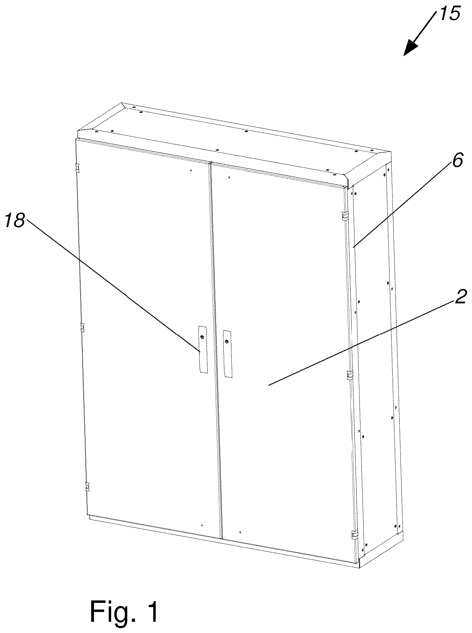

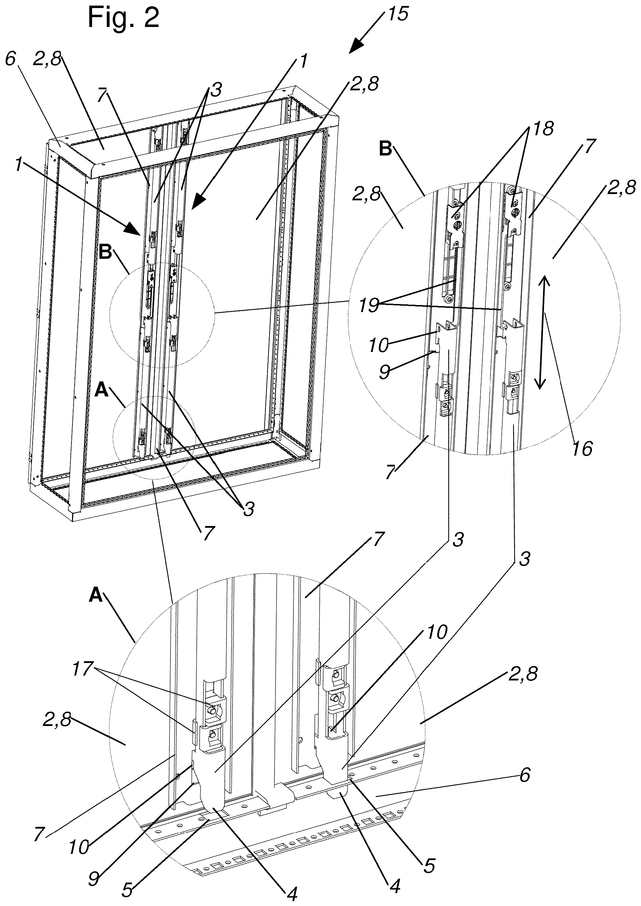

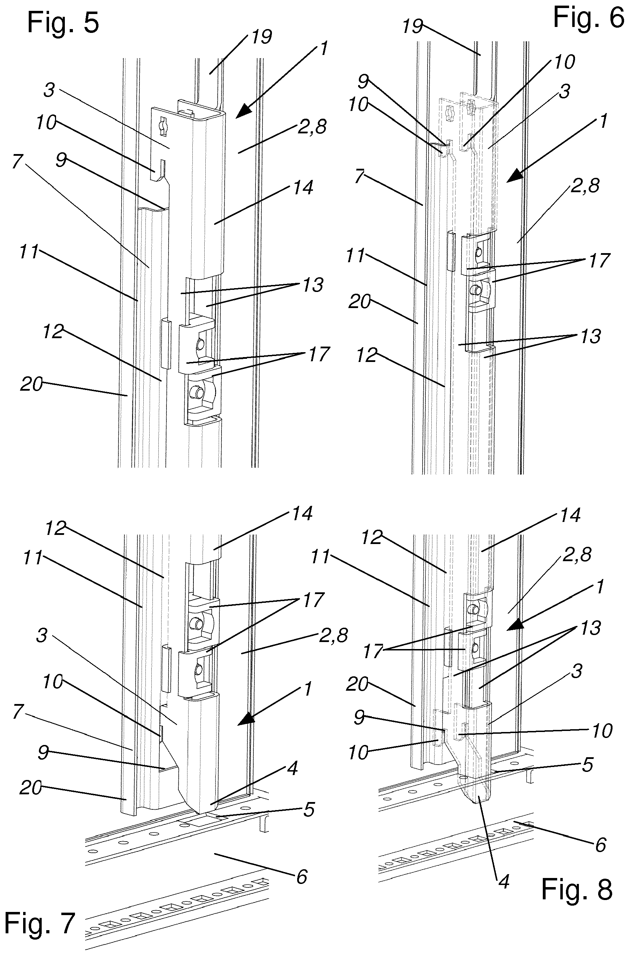

Die Fig. 1 bis 8 zeigen zumindest Teile einer bevorzugten Ausführungsform eines Verschlusssystems 1 für eine Schaltschranktür 2, umfassend wenigstens eine zwischen einer Verriegelungsstellung und einer Freigabestellung vorgebbar bewegbare Verschlussstange 3, wobei ein erstes Ende 4 der Verschlussstange 3 vorgesehen ist, in der Verriegelungsstellung zum Verschließen der Schaltschranktür 2 in eine Öffnung 5 eines Schaltschrankgehäuses 6 einzugreifen. Das Verschlusssystem 1 ist ein System zum Verschließen einer Schaltschranktür 2. Hierfür weist das Verschlusssystem 1 eine Verschlussstange 3 auf, welche zwischen zwei Positionen bewegt werden kann. In der Verriegelungsposition der Verschlussstange 3 wird in einem eingebauten Zustand des Verschlusssystems 1 die Schaltschranktür 2 durch das in die Öffnung 5 des Schaltschrankgehäuses 6 eingreifende erste Ende 4 gehalten, während in der Freigabestellung die Schaltschranktür 2 geöffnet werden kann. In den Fig. 5 und 7 ist das Verschlusssystems 1 der bevorzugten Ausführungsform in der Freigabestellung dargestellt, während in Fig. 6 und 8 das Verschlusssystems 1 der bevorzugten Ausführungsform in der Verriegelungsstellung dargestellt ist. Die Bewegungsrichtung der Verschlussstange 3 ist in Fig. 2 durch einen Doppelpfeil 16 angedeutet. In den Fig. 1 bis 8 sind nicht alle Merkmale durchgehend mit Bezugszeichen versehen.

Vorgesehen ist, dass das Verschlusssystem 1 wenigstens ein im Wesentlichen parallel zu der Verschlussstange 3 verlaufendes Versteifungsprofil 7 aufweist, dass das Versteifungsprofil 7 zu einer lagefesten Befestigung an einen Grundkörper 8 der Schaltschranktür 2 vorgesehen ist, dass das wenigstens eine Versteifungsprofil 7 wenigstens eine Verriegelungsaufnahme 9 aufweist, und dass die Verschlussstange 3 wenigstens einen Verriegelungsfortsatz 10 aufweist, wobei der wenigstens eine Verriegelungsfortsatz 10 in der Verriegelungsstellung eine formschlüssige Verbindung mit der wenigstens einen Verriegelungsaufnahme 9 bildet und in der Freigabestellung die wenigstens eine Verriegelungsaufnahme 9 freigibt. Das Versteifungsprofil 7 ist dazu vorgesehen lagefest an der restlichen Schaltschranktür 2 befestigt zu werden.

Das Versteifungsprofil 7, welches insbesondere als Blechprofil ausgebildet sein kann, weist eine parallel zur Verschlussstange 3 verlaufende Längserstreckung auf, und ist gegenüber der Verschlussstange 3 beweglich angeordnet. Durch die wenigstens eine Verriegelungsaufnahme 9 und den wenigstens einen Verriegelungsfortsatz 10 kann in der Verriegelungsstellung eine zusätzliche formschlüssige Verbindung zwischen Versteifungsprofil 7 und Verschlussstange 3 bereitgestellt werden, welche in der Freigabestellung wieder gelöst wird. Die formschlüssige Verbindung bezieht sich hierbei auf einen Formschluss bezüglich einer die Verschlussstange 3 von dem Versteifungsprofil 7 separierenden Kraft, wie diese bei einem Überdruck im Schaltschrank 15 entsteht. Dadurch kann eine Schaltschranktür 2 einfach zusätzlich versteift werden, wobei in der Verriegelungsstellung eine Druckkraft auf die Schaltschranktür 2 an mehreren Stellen von der Schaltschranktür 2 an die Verschlussstange 3 weitergeleitet werden kann.

Dadurch ergibt sich der Vorteil, dass eine mit dem Verschlusssystem 1 ausgerüstete Schaltschranktür 2 wesentlich höheren Drücken standhalten kann, wodurch die Umgebung besser vor den negativen Auswirkungen eines Störlichtbogens und der dadurch verursachten Explosion im Schaltschrank 15 geschützt werden kann. Durch das Versteifungsprofil 7 kann eine ansonsten herkömmlich ausgebildete Schaltschranktür 2 wesentlich steifer ausgebildet werden, wodurch die Verschlussstangen 3 auch bei höheren Drücken noch zuverlässig in die Öffnungen 5 eingreifen können. Durch die in Verriegelungsaufnahmen 9 und Verriegelungsfortsätze 10 kann die Verschlusstange 3 in der Verriegelungsstellung zusätzlich an mehreren Punkten befestigt sein, wodurch die Verschlussstange 3 bei einer Explosion schwerer aus deren Halterung gerissen werden kann. Da diese zusätzliche Verankerung der Verschlusstange 3 mit dem Versteifungsprofil 7 lediglich in Verriegelungsstellung erfolgt und nicht in der Freigabestellung, kann eine Montage der Verschlusstange 3 mit vergleichsweise wenig Aufwand erfolgen. Das Verschlusssystem 1 kann weiters mit besonders wenigen Einzelteilen ausgebildet sein, was eine Montage zusätzlich erleichtert. Weiters können herkömmliche Schaltschränke 15 einfach und mit wenig Aufwand mit dem neuen Verschlusssystem 1 nachgerüstet werden. Zusätzlich ist das neue Verschlusssystem 1 in der Bedienung nicht aufwendiger als herkömmliche Verschlusssysteme 1.

Weiters kann vorgesehen sein, dass die Verschlusstange 3 über wenigstens eine Halteeinrichtung 17 an dem Versteifungsprofil 7 beweglich befestigt ist. Die Halteeinrichtung 17 kann insbesondere Halteklammern umfassen, welche die Verschlussstange 3 auch in der Freigabestellung halten. In der Verriegelungsstellung kann die Verschlussstange 3 dabei von den Verriegelungsfortsätzen 10 als auch der Halteeinrichtung 17 an dem Versteifungsprofil 7 gehalten werden, wobei hier vorgesehen sein kann, dass die Verriegelungsfortsätzen 10 höhere Kräfte aufnehmen können als die Halteeinrichtung 17.

Das Verschlusssystem 1 kann insbesondere zwei Verschlussstange 3 aufweisen, wobei eine Verschlussstange 3 in einem Bodenbereich angeordnet ist und eine weitere Verschlussstange 3 in einem Deckenbereich.

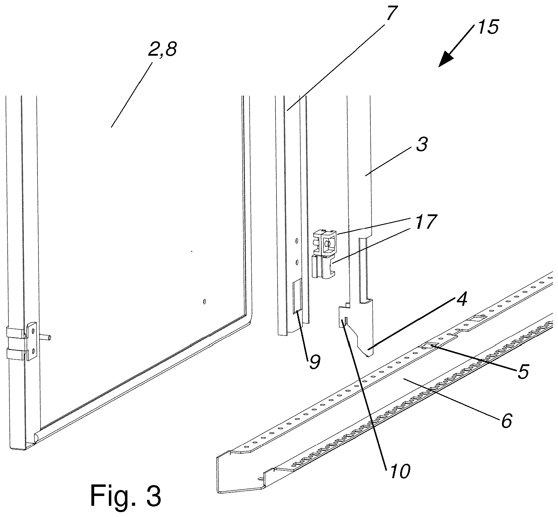

Insbesondere kann eine Schaltschranktür 2 umfassend das Verschlusssystem 1 vorgesehen sein. Die Schaltschranktür 2 kann insbesondere einen Grundkörper 8 aufweisen, an welchem das Versteifungsprofil 7 lagefest befestigt ist. Die Schaltschranktür 2 kann weiters über wenigstens ein Scharnier verfügen, mit welchem der Grundkörper 8 an das Schaltschrankgehäuse 6 befestigbar ist. Der Grundkörper 8 kann insbesondere aus Blech ausgebildet sein. Die Anbringung des Verschlusssystems 1 an den Grundkörper 8 ist in Fig. 3 angedeutet.

Die Schaltschranktür 2 kann insbesondere lediglich ein Verschlusssystem 1 aufweisen.

Das Verschlusssystem 1 kann insbesondere lediglich ein Versteifungsprofil 7 aufweisen.

Weiters kann vorgesehen sein, dass das Versteifungsprofil 7 über eine im Wesentlichen komplette Höhe der Schaltschranktür 2 verläuft.

Bevorzugt kann vorgesehen sein, dass das Versteifungsprofil 7 mehrere Befestigungseinrichtungen zur Befestigung an den Grundkörper 8 aufweist. Die Befestigungseinrichtungen können insbesondere Schraubendurchführungen sein.

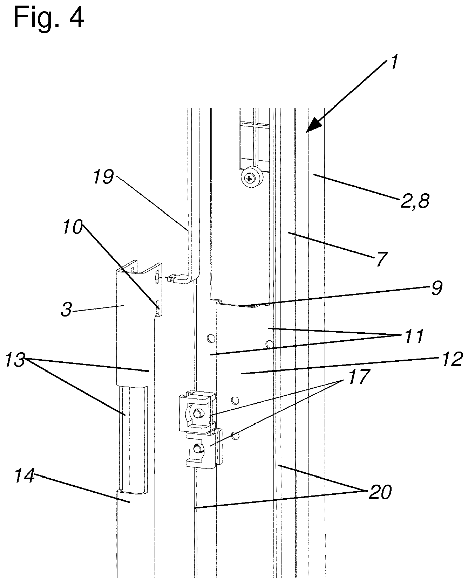

Die Schaltschranktür 2 kann weiters bevorzugt eine Betätigungseinrichtung 18 aufweisen, über welche Betätigungseinrichtung 18 die wenigstens eine Verschlussstange von der Verriegelungsstellung in die Freigabestellung verbringbar ist. Die Betätigungseinrichtung 18 kann insbesondere ein Schloss, einen beweglichen Griff oder eine Taste aufweisen. Die Betätigungseinrichtung 18 kann weiters bewegliche Schubstangen 19 aufweisen, welche an den Verschlussstangen 3, insbesondere an einem zweiten Ende der Verschlussstangen 3, befestigbar sind. Die Möglichkeit der Befestigung der Schubstange 19 an die Verschlussstange 3 ist in der Fig. 4 angedeutet.

Das Versteifungsprofil 7 kann insbesondere im Bereich der Betätigungseinrichtung 18 eine Aussparung aufweisen, sodass das Versteifungsprofil 7 auf eine bestehende Betätigungseinrichtung 18 aufgesetzt werden kann.

Weiters ist ein Schaltschrank 15 umfassend wenigstens ein Verschlusssystem 1 vorgesehen. Der Schaltschrank 15 kann insbesondere ein Blechschrank sein. Der Schaltschrank kann insbesondere ein Schaltschrankgehäuse 6 aufweisen. Das Schaltschrankgehäuse 6 kann insbesondere einen Rahmen und am Rahmen angebrachte Blechverkleidungen umfassen. Der Schaltschrank15 kann insbesondere über eine oder zwei Schaltschranktüren 2 aufweisen, welche mit dem Verschlusssystem 1 ausgestattet sind. Der Schaltschrank 15 kann insbesondere abgesehen von den dem neuen Verschlusssystem 1 wie ein herkömmlicher Schaltschrank 15 ausgebildet sein.

Eine bevorzugte Ausführungsform des Schaltschrankes 15 ist in den Fig. 1 und 2 dargestellt, wobei in Fig. 2 die Blechverkleidung nicht dargestellt ist. In Fig. 1 und 2 weist der Schaltschrank 15 zwei Schaltschranktüren 2 auf, wobei die Verschlussstangen 3 einer der beiden Schaltschranktüren 2 in der Freigabestellung sind und die Verschlussstangen 3 der anderen Schaltschranktür 2 in der Verriegelungsstellung sind.

Besonders bevorzugt kann vorgesehen sein, dass mehrere Verriegelungsaufnahmen 9 mit zugeordneten Verriegelungsfortsätzen 10 vorgesehen sind. Insbesondere können Verriegelungsfortsätzen 10 im Bereich des ersten Endes 4 und des zweiten Endes der Verschlussstange 3 angeordnet sein. Dadurch kann die einwirkende Kraft auf einem großen Bereich abgeleitet werden.

Besonders bevorzugt kann vorgesehen sein, dass das Versteifungsprofil 7 wenigstens zwei parallel verlaufende Kontaktbereiche 11 zur Auflage auf dem Grundkörper 8 der Schaltschranktür 2 aufweist, und dass die beiden Kontaktbereiche durch einen U-förmigen Steg 12 miteinander verbunden sind. In den Kontaktbereichen 11 können die Befestigungseinrichtungen des Versteifungsprofils 7 angeordnet sein. Die Verriegelungsaufnahmen 9 können im Bereich des Steges ausgebildet sein. Dadurch kann das Versteifungsprofil 7 besonders einfach ausgebildet werden.

Weiters kann vorgesehen sein, dass das Versteifungsprofil 7 zusätzliche Versteifungsrippen aufweist, welche an einer dem Steg 12 abgewandten Seite der Kontaktbereiche 11 angeformt sind. Das Versteifungsprofil 7 hat dadurch ein im Wesentlichen W-förmiges Profil. Dadurch kann das Versteifungsprofil 7 zusätzlich versteift werden.

Besonders bevorzugt kann vorgesehen sein, dass die wenigstens eine Verriegelungsaufnahme 9 als Aussparung des Steges 12 ausgebildet ist. Die Aussparung des Steges 12 kann bis zu einem bereichsweise Fehlen des Steges 12 führen. Dadurch kann die wenigstens eine Verriegelungsaufnahme 9 besonders einfach ausgebildet sein.

Insbesondere kann vorgesehen sein, dass der wenigstens eine Verriegelungsfortsatz 10 hakenförmig ausgebildet ist und in der Verriegelungsstellung den Steg 11 hintergreift. Dadurch kann der wenigstens eine Verriegelungsfortsatz 10 sehr einfach ausgebildet sein, wobei dieser bei einer Explosion in dem Schaltschrank 15 zuverlässig die Verschlussstange 3 an dem Versteifungsprofil 7 hält.

Besonders bevorzugt kann vorgesehen sein, dass die wenigstens eine Verschlussstange 3 ein im Wesentlichen U-förmiges Profil mit zwei Schenkeln 13 und einem, die Schenkeln 13 miteinander verbindenden Mittelteil 14 aufweist. Dadurch ist die wenigstens eine Verschlussstange 3 wesentlich steifer als eine lediglich als Flachband ausgebildete Verschlussstange 3.

Insbesondere kann vorgesehen sein, dass die Verriegelungsfortsätze 10 symmetrisch auf beiden Schenkel 13 angeordnet sind.

Weiters kann vorgesehen sein, dass zwei Verriegelungsfortsätzen 10 lediglich eine Verriegelungsaufnahme 9 zugeordnet ist.

Insbesondere kann vorgesehen sein, dass der wenigstens eine Verriegelungsfortsatz 10 fluchtend zu einem der Schenkel 13 ausgebildet ist. Der wenigstens eine Verriegelungsfortsatz 10 kann hierbei als Verlängerung des Schenkels 13 ausgebildet werden. Dadurch kann die Verschlusstange 3 gemeinsam mit den Verriegelungsfortsätzen 10 aus einem Stück gestanzt, und anschließend gebogen werden, wodurch diese besonders einfach aber auch robust ausgebildet werden

## Patentansprüche

1. Verschlusssystem (1) für eine Schaltschranktür (2), umfassend wenigstens eine zwischen einer Verriegelungsstellung und einer Freigabestellung vorgebbar bewegbare Verschlussstange (3), wobei ein erstes Ende (4) der Verschlussstange (3) vorgesehen ist, in der Verriegelungsstellung zum Verschließen der Schaltschranktür (2) in eine Öffnung (5) eines Schaltschrankgehäuses (6) einzugreifen, **dadurch gekennzeichnet, dass** das Verschlusssystem (1) wenigstens ein im Wesentlichen parallel zu der Verschlussstange (3) verlaufendes Versteifungsprofil (7) aufweist, dass das Versteifungsprofil (7) zu einer lagefesten Befestigung an einen Grundkörper (8) der Schaltschranktür (2) vorgesehen ist, dass das wenigstens eine Versteifungsprofil (7) wenigstens eine Verriegelungsaufnahme (9) aufweist, und dass die Verschlussstange (3) wenigstens einen Verriegelungsfortsatz (10) aufweist, wobei der wenigstens eine Verriegelungsfortsatz (10) in der Verriegelungsstellung eine formschlüssige Verbindung mit der wenigstens einen Verriegelungsaufnahme (9) bildet und in der Freigabestellung die wenigstens eine Verriegelungsaufnahme (9) freigibt.

2. Verschlusssystem (1) nach Anspruch 1, **dadurch gekennzeichnet, dass** mehrere Verriegelungsaufnahmen (9) mit zugeordneten Verriegelungsfortsätzen (10) vorgesehen sind.

3. Verschlusssystem (1) nach Anspruch 1 oder 2, **dadurch gekennzeichnet, dass** das Versteifungsprofil (7) wenigstens zwei parallel verlaufende Kontaktbereiche (11) zur Auflage auf dem Grundkörper (8) der Schaltschranktür (2) aufweist, und dass die beiden Kontaktbereiche durch einen U-förmigen Steg (12) miteinander verbunden sind.

4. Verschlusssystem (1) nach Anspruch 3, **dadurch gekennzeichnet, dass** die wenigstens eine Verriegelungsaufnahme (9) als Aussparung des Steges (12) ausgebildet ist.

5. Verschlusssystem (1) nach Anspruch 3 oder 4, **dadurch gekennzeichnet, dass** der wenigstens eine Verriegelungsfortsatz (10) hakenförmig ausgebildet ist und in der Verriegelungsstellung den Steg (11) hintergreift.

6. Verschlusssystem (1) nach einem der Ansprüche 1 bis 4, **dadurch gekennzeichnet, dass** die wenigstens eine Verschlussstange (3) ein im Wesentlichen U-förmiges Profil mit zwei Schenkeln (13) und einem, die Schenkeln (13) miteinander verbindenden Mittelteil (14) aufweist.

7. Verschlusssystem (1) nach Anspruch 6, **dadurch gekennzeichnet, dass** der wenigstens eine Verriegelungsfortsatz (10) fluchtend zu einem der Schenkel (13) ausgebildet ist.

8. Schaltschranktür (2) umfassend ein Verschlusssystem (1) nach einem der Ansprüche 1 bis 7.

9. Schaltschrank (15) umfassend wenigstens ein Verschlusssystem (1) nach einem der Ansprüche 1 bis 7.

## Claims

1. Closure system (1) for a switchgear cabinet door (2), including at least one closing rod (3) which is predeterminably movable between a closing position and a release position, wherein a first end (4) of the closing rod (3) is provided, in the closing position for closing the switchgear cabinet door (2), to engage in an opening (5) of a switchgear cabinet housing (6), **characterised in that** the closure system (1) has at least one stiffening profile (7) extending substantially parallel to the closing rod (3), that the stiffening profile (7) is provided for a fixed-position fastening to a base body (8) of the switchgear cabinet door (2), that the at least one stiffening profile (7) has at least one closing receptacle (9), and that the closing rod (3) has at least one closing extension (10), wherein the at least one closing extension (10) in the closing position forms a form-fitting connection with the at least one closing receptacle (9) and in the release position releases the at least one closing receptacle (9).

2. Closure system (1) according to claim 1, **characterised in that** several closing receptacles (9) with assigned closing extensions (10) are provided.

3. Closure system (1) according to claim 1 or 2, **characterised in that** the stiffening profile (7) has at least two parallel running contact regions (11) for resting on the base body (8) of the switchgear cabinet door (2), and that the two contact regions are connected with one another by means of a U-shaped web (12).

4. Closure system (1) according to claim 3, **characterised in that** the at least one closing receptacle (9) is formed as a cutout of the web (12).

5. Closure system (1) according to claim 3 or 4, **characterised in that** the at least one closing extension (10) is formed in the shape of a hook and in the closing position grips behind the web (11).

6. Closure system (1) according to any of claims 1 to 4, **characterised in that** the at least one closing rod (3) has a substantially U-shaped profile having two legs (13) and a middle part (14) connecting the legs (13) with one another.

7. Closure system (1) according to claim 6, **characterised in that** the at least one closing extension (10) is formed in alignment with one of the legs (13).

8. Switchgear cabinet door (2) including a closure system (1) according to any of claims 1 to 7.

9. Switchgear cabinet (15) including at least one closure system (1) according to any of claims 1 to 7.

## Revendications

1. Système de fermeture (1) pour une porte d'armoire de commande (2), comprenant au moins une tige de fermeture (3) mobile pouvant être prédéfinie entre une position de verrouillage et une position de libération, dans lequel une première extrémité (4) de la tige de fermeture (3) est prévue pour s'engager dans une ouverture (5) d'un boîtier d'armoire de commande (6) dans la position de verrouillage pour fermer la porte d'armoire de commande (2), **caractérisé en ce que** le système de fermeture (1) présente au moins un profil de raidissement (7) s'étendant essentiellement parallèlement à la tige de fermeture (3), **en ce que** le profil de raidissement (7) est prévu pour une fixation en position fixe sur un corps principal (8) de la porte d'armoire de commande (2), **en ce que** l'au moins un profil de raidissement (7) présente au moins un réceptacle de verrouillage (9), et **en ce que** la tige de fermeture (3) présente au moins un prolongement de verrouillage (10), dans lequel l'au moins un prolongement de verrouillage (10) forme une liaison par complémentarité de forme avec l'au moins un réceptacle de verrouillage (9) dans la position de verrouillage et libère l'au moins un réceptacle de verrouillage (9) dans la position de libération.

2. Système de fermeture (1) selon la revendication 1, **caractérisé en ce que** plusieurs réceptacles de verrouillage (9) sont dotés de prolongements de verrouillage (10) associés.

3. Système de fermeture (1) selon la revendication 1 ou 2, **caractérisé en ce que** le profil de raidissement (7) présente au moins deux zones de contact (11) s'étendant parallèlement pour prendre appui sur le corps principal (8) de la porte d'armoire de commande (2), et **en ce que** les deux zones de contact sont reliées l'une à l'autre par une entretoise en forme de U (12).

4. Système de fermeture (1) selon la revendication 3, **caractérisé en ce que** l'au moins un réceptacle de verrouillage (9) est réalisé en tant qu'encoche de l'entretoise (12).

5. Système de fermeture (1) selon la revendication 3 ou 4, **caractérisé en ce que** l'au moins un prolongement verrouillage (10) est réalisé en forme de crochet et s'engage avec l'entretoise (11) par l'arrière dans la position de verrouillage.

6. Système de fermeture (1) selon l'une quelconque des revendications 1 à 4, **caractérisé en ce que** l'au moins une tige de fermeture (3) présente un profil essentiellement en forme de U avec deux branches (13) et une partie centrale (14) reliant les branches (13) l'une à l'autre.

7. Système de fermeture (1) selon la revendication 6, **caractérisé en ce que** l'au moins un prolongement verrouillage (10) est réalisé en coïncidence avec l'une des branches (13).

8. Porte d'armoire de commande (2) comprenant un système de fermeture (1) selon l'une quelconque des revendications 1 à 7.

9. Armoire de commande (15) comprenant au moins un système de fermeture (1) selon l'une quelconque des revendications 1 à 7.
